# EUROPEAN PATENT APPLICATION

(11) **EP 4 549 363 A1**
(43) Date of publication of application: **07.05.2025**
(21) Application number: 24209625.3
(22) Date of filing: 29.10.2024
(51) Int. Cl.: B66B 25/00

(54) **CONTROL METHOD FOR A CONVEYOR, CORRESPONDING CONTROL SYSTEM, CONTROL NODE, AND CONTROL END**

(30) Priority: 02.11.2023 CN 202311459117
(71) Applicant: OTIS Elevator Company, Farmington, CT 06032 (US)
(72) Inventor: Cheng, Lifei, Zhejiang, 310019 (CN); Xu, Pengpeng, Zhejiang, 310019 (CN); Hu, Zhaoxia, Zhejiang, 310019 (CN)
(74) Representative: Schmitt-Nilson Schraud Waibel Wohlfrom Patentanwälte Partnerschaft mbB

(57) **Abstract**

The present application provides a control method for a conveyor device, which is applicable to a control system comprising a control terminal and one or more control nodes, wherein each of the control nodes is in communication connection with the control terminal. The method comprises: controlling, by the control node that receives an operation signal, a movable device associated with it to reach a conveyor device to be controlled, in response to the operation signal sent by a control terminal; and determining whether to control the conveyor device to be controlled according to the indication of the operation signal, based on sensed data from a sensing device regarding the condition of an object to be conveyed on the conveyor device to be controlled. A control system, a control node, and a control terminal are also provided.

## Description

The present application relates to the control of a conveyor device, and in particular, to the control of a conveyor device through distributed control nodes.

It usually requires manual operation to start and stop an escalator. That is, the maintenance personnel arrive at the escalator and control the escalator to start and stop based on its condition, which is time-consuming and relatively difficult to manage. The method of remotely controlling an escalator through video surveillance poses certain difficulties due to the difficulty in preventing passengers from taking the escalator.

The present application provides a control method for a conveyor device, which can be applied to a control system comprising a control terminal and one or more control nodes, where the one or more control nodes are respectively in communication connection with the control terminal. The method may comprise: controlling, by the control node that receives an operation signal, a movable device associated with said control node to reach a conveyor device to be controlled, in response to the operation signal sent by a control terminal; and determining, by the control node, whether to control the conveyor device to be controlled according to indication of the operation signal, based on sensed data from a sensing device regarding the condition of objects on the conveyor device to be controlled.

Particular embodiments further may include at least one, or a plurality of, the following optional features, alone or in combination with each other:

According to the control method, optionally, determining, by the control node, whether to control the conveyor device to be controlled according to the indication of the operation signal, based on sensed data from the sensing device may further comprise: determining whether there are objects on the conveyor device to be controlled; and controlling the conveyor device to be controlled according to the indication of the operation signal if no object is on the conveyor device to be controlled.

According to the control method, optionally, the method may further comprise: continuously determining whether there objects on the conveyor device to be controlled based on the sensed data from the sensing device within a preset duration if it is determined that there are objects on the conveyor device to be controlled; generating and sending a feedback signal indicating that the conveyor device to be controlled is not controlled according to the indication of the operation signal, if there are always objects on the conveyor device within the preset duration; or controlling the conveyor device to be controlled according to the indication of the operation signal, when a condition of no object on the conveyor device occurs within the preset duration..

According to the control method, optionally, the method may further comprise: sending, by the control terminal, an operation signal to a control node managing the conveyor to be controlled and associated with a movable device which is located on a floor of a building where the lower landing of said conveyor device is located, if the conveyor device to be controlled is an up-going conveyor device; and sending, by the control terminal, an operation signal to a control node managing the conveyor to be controlled and associated with a movable device which is located on a floor of a building where the upper landing of said conveyor device is located, if the conveyor device to be controlled is a down-going conveyor device.

According to the control method, optionally, the method may further comprise: determining, by the control node, whether the conveyor device to be controlled according to the indication of the operation signal is up-going or down-going based on the sensed data from the sensing device regarding the operation condition of the conveyor device to be controlled; controlling the movable device to reach the lower landing of the conveyor device to be controlled in the case of up-going; and controlling the movable device to reach the upper landing of the conveyor device to be controlled in the case of down-going. Sensing devices can be arranged on the movable devices. In other words, sensing devices can be arranged on the respective movable devices associated with the control nodes.

According to the control method, optionally, the method may further comprise: controlling a voice device to output voice to prompt the objects to leave or not enter the conveyor device to be controlled. Voice devices can be arranged on the movable devices. In other words, the voice devices can be arranged on the respective movable devices associated with the control nodes. According to an example of the present application, the control node, when controlling the movable device associated with it to reach the conveyor device to be controlled, can control the voice device arranged on the movable device to output a voice prompting the objects to leave or not enter the conveyor device to be controlled.

According to another aspect of the present application, a control system for a conveyor device is also provided, the control system comprising: a control terminal; one or more control nodes, a sensing device, and a voice device. Each of the control nodes is in communication connection with the control terminal, and each of the control nodes is configured to be associated with a movable device, where the associated movable device manages more than one conveyor device under the control of the control node. The sensing device can be used to sense objects on the conveyor device and the operation condition of the conveyor device, and the control node can obtain the sensed data of the sensing device. The voice device can output voice under the control of the control node. The control system is configured to execute any one of the control methods described herein. As an example, the sensing device and the voice device can be arranged on the movable device.

In the control system, as an example, the movable device is a robot, the control node is arranged inside the robot associated with it, and the sensing device and the voice device are respectively implemented by the sensing system and voice system of the robot.

According to yet another aspect of the present application, a control node for controlling the conveyor device is further provided. The control node comprises: a communication unit configured to receive an operation signal for controlling the conveyor device and to transmit a signal; a control unit configured to determine a conveyor device to be controlled based on the operation signal, control a movable device associated with the control node to reach the conveyor device to be controlled, and determine whether to control the conveyor device to be controlled according to an indication of the operation signal based on sensed data from a sensing device indicating the condition of objects on the conveyor device to be controlled sensed by the sensing device.

Particular embodiments further may include at least one, or a plurality of, the above optional features, alone or in combination with each other:

According to still another aspect of the present application, a control terminal is further provided. The control terminal is in communication connection with a plurality of control nodes, each of which is implemented by the control node described above. The control terminal comprises: a memory for storing the corresponding relationships between respective control nodes and their managed conveyor devices; a controller configured to generate operation signals for controlling the conveyor devices according to control needs; and a communication unit configured to send the operation signals to the control node and to receive feedback signals from each control node. The control terminal can implement the control terminal in any of the examples described above.

Particular embodiments further may include at least one, or a plurality of, the above optional features, alone or in combination with each other:

In the above examples, the movable device is a robot, and the control node can be arranged in the robot. The sensing device and voice device can be implemented by the sensing system and voice system of the robot.

In the above examples, the conveyor device is an escalator.

The present application can be fully understood by referring to the detailed description of the specific embodiments below in conjunction with the accompanying drawings, where:
FIG. 1 illustrates an exemplary structure of an escalator 10;
FIG. 2 illustrates, as an example, a block diagram of a control system which applies the control method for a conveyor device according to the present application;
FIG. 3 is a flowchart of a control method for a conveyor device according to an example of the present application;
FIG. 4 is a flowchart of a control method for a conveyor device according to some examples of the present application;
FIG. 5 is a flowchart of a control method for a conveyor device according to other examples of the present application;
FIG. 6 illustrates a block diagram of a control node according to an example of the present application;
FIG. 7 is a block diagram of a control terminal according to an example of the present application; and
FIG. 8 is a block diagram of a control system according to some examples of the present application.

In order to make the objective, technical solution, and advantages of the embodiments of the present application clearer, the embodiments of the present application will be described in a clear and complete manner below in conjunction with the accompanying drawings. It should be noted that the embodiments described are only part of the embodiments of the technical solution of the present application, not all of them. All other embodiments obtained by those skilled in the art based on the embodiments recited in the present application without the need for creative labor are covered by the scope of protection of the present application.

The terms "first", "second", etc. in the description, claims, and accompanying drawings of the present application are used to distinguish similar objects, rather than to describe a specific order or sequence thereof. It should be appreciated that the terms used in this way can be interchanged with each other in appropriate cases, so that the embodiments described herein can be implemented in orders other than those illustrated or described in the embodiments herein. In addition, "first" and "second" are only used for descriptive purposes, and cannot be understood as indicating or implying relative importance or implying or indicating the quantity of technical features indicated. Therefore, the features defined with "first" and "second" can explicitly or implicitly include one or more of such features. In the depiction of the embodiments of the present application, unless otherwise stated, "a plurality of" means two or more.

The terms "example", "as an example", or "illustratively", used in the following text mean "used as an example, embodiment, or illustration". Any embodiment depicted as an "example", or "as an example" or "illustratively" need not be interpreted as being superior or better than other embodiments.

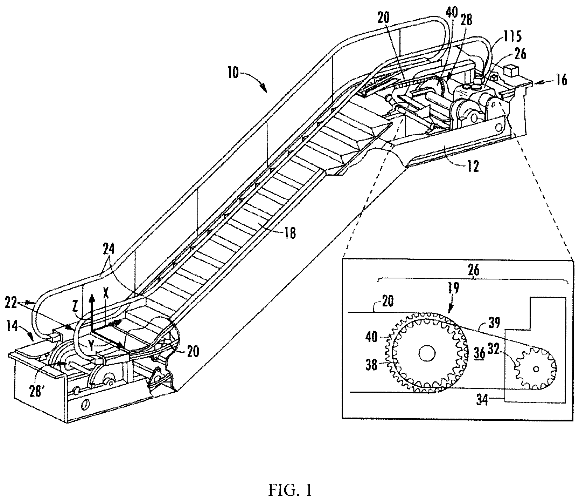

FIG. 1 illustrates an escalator 10. It should become apparent in the ensuing description that the present invention is applicable to other passenger conveyor systems, such as moving walks. The escalator 10 generally includes a truss 12 extending between a lower landing 14 and an upper landing 16. A plurality of sequentially connected steps or tread plates 18 are connected to a step chain 20 and travel through a closed loop path within the truss 12. A pair of balustrades 22 includes moving handrails 24. A drive machine 26, or drive system, is typically located in a machine space 28 under the upper landing 16; however, an additional machine space 28' can be located under the lower landing 14. The drive machine 26 is configured to drive the tread plates 18 and/or handrails 24 through the step chain 20. The drive machine 26 operates to move the tread plates 18 in a chosen direction at a desired speed under normal operating conditions.

The tread plates 18 make a 180 degree heading change in a turn-around area 19 located under the lower landing 14 and upper landing 16. The tread plates 18 are pivotally attached to the step chain 20 and follow a closed loop path of the step chain 20, running from one landing to the other, and back again.

The drive machine 26 includes a first drive member 32, such as motor output sheave, connected to a drive motor 34 through a belt reduction assembly 36 including a second drive member 38, such as an output sheave, driven by a tension member 39, such as an output belt. The first drive member 32 in some embodiments is a driving member, and the second drive member 38 is a driven member.

As used herein, the first drive member 32 and/or the second drive member 38, in various embodiments, may be any type of rotational device, such as a sheave, pulley, gear, wheel, sprocket, cog, pinion, etc. The tension member 39, in various embodiments, can be configured as a chain, belt, cable, ribbon, band, strip, or any other similar device that operatively connects two elements to provide a driving force from one element to another. For example, the tension member 39 may be any type of interconnecting member that extends between and operatively connects the first drive member 32 and a second drive member 38. In some embodiments, as shown in FIG. 1, the first drive member 32 and the second drive member may provide a belt reduction. For example, first drive member 32 may be approximately 75 mm (2.95 inches) in diameter while the second drive member 38 may be approximately 750 mm (29.53 inches) in diameter. The belt reduction, for example, allows the replacement of sheaves to change the speed for 50 or 60 Hz electrical supply power applications, or different step speeds. However, in other embodiments, the second drive member 38 may be substantially similar to the first drive member 32.

As noted, the first drive member 32 is driven by drive motor 34 and thus is configured to drive the tension member 39 and the second drive member 38. In some embodiments, the second drive member 38 may be an idle gear or similar device that is driven by the operative connection between the first drive member 32 and the second drive member 38 by means of tension member 39. The tension member 39 travels around a loop set by the first drive member 32 and the second drive member 38, which hereinafter may be referred to as a small loop. The small loop is provided for driving a larger loop which consists of the step chain 20, and is driven by an output sheave 40, for example. Under normal operating conditions, the tension member 39 and the step chain 20 move in unison, based upon the speed of movement of the first drive member 32 as driven by the drive motor 34.

The escalator 10 also includes a controller 115 that is in electronic communication with the drive motor 34. The controller 115 may be located, as shown, in the machine space 28 of the escalator 10 and is configured to control the operation of the escalator 10. For example, the controller 115 may provide drive signals to the drive motor 34 to control the acceleration, deceleration, stopping, etc. of the tread plates 18 through the step chain 20. The controller 115 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The control system employing the control method for a conveyor device according to the present application may comprise a control terminal and one or more control nodes, where the one or more the control nodes are respectively communicatively connected with the control terminal, and the number of control nodes can be configured as required.

The conveyor device described herein can be arranged inside a building, which can be one using a plurality of conveyor devices to transport objects, such as a shopping mall, an airport, a large supermarket. The conveyor device according to various embodiments of the present application can be one of an escalator, a moving walkway, and such kind of conveying device for transporting passengers and/or items. The conveyor devices may also be referred to as conveyor systems, conveying systems, passenger conveyors, passenger conveyor systems, and the like. The objects to be conveyed or conveying here may include people, pets, items, and other objects which can be transported by the conveyor devices. In some example embodiment hereinafter, there are a plurality of conveyor devices applied inside the building. However, the present application does not exclude an application scenario with only one conveyor device.

The control terminal herein can be a separate device such as a computer, an intelligent terminal, a control cabinet, etc.; or it can also be a system comprising a plurality of devices and/or modules; or it can also be a cloud device. The specific implementation of the control terminal depends on the actual application, as long as it can achieve the control over conveyor devices such as escalators.

The control node herein refers to a control endpoint for controlling conveyor devices such as escalators. As an example, the control node can be a module, device, or equipment that can communicate with other devices (such as the control terminal of the present application). As an example, the control node can be a software module implemented by program instructions, or a controller or control device implemented by the combination of hardware and program instructions. In some cases, control nodes can be arranged in devices such as robots. In other cases, control nodes can be implemented in the cloud. The control node controls conveyor devices in certain areas of a building, while the control terminal overall controls the conveyor devices in the building.

The general structure of the escalator is described above in conjunction with FIG. 1. The following embodiments will describe the present application using an escalator as a conveyor device. However, it should be appreciated that the embodiments described herein in conjunction with an escalator can also be applied to moving walks.

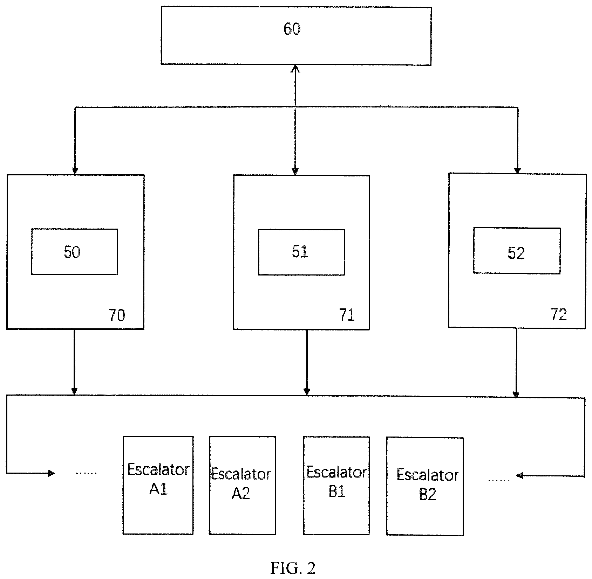

FIG. 2 shows a block schematic diagram of a control system, which can employ the control method for a conveyor device according to an exemplary embodiment. For example, the conveyor device is an escalator. In the exemplary embodiment, three control nodes 50, 51, and 52 are included by the control system, in which the control nodes 50, 51, and 52 each are communicatively connected with the control terminal 60. In the exemplary embodiment, the control nodes 50, 51, and 52 are respectively associated with movable devices 70, 71, and 72 in such a way that the movable device 70 manages, under control of the node 50, conveyor devices assigned to the node 50, the movable device 71 manages, under control of the node 51, conveyor devices assigned to the node 51, and the movable device 72, under control of the node 52, manages conveyor devices assigned to the node 52. The conveyor device, which is indicated by the operation signal to be controlled, will be referred to as the conveyor device to be controlled.

The way of association between the control nodes and the mobile devices can be communicative connection or electrical connection. For instance, a control node can be communicatively connected with a movable device to control the movable device, if the control node is a separate control device or a cloud controller. In this case, the control node may be or may not be arranged on the movable device. In other examples, a control node can be arranged into a movable device. For example, the control node is configured as a part of the control system of the movable device, and if so the movable device can be regarded as the control node.

In the non-limiting examples as below, each of the control node is arranged in a movable device associated with it. Referring to FIG. 2, the control nodes 50, 51, and 52 are respectively arranged in the movable devices 70, 71, and 72.

In some examples, the escalators controlled by the nodes 50, 51, and 52 may have the same one. In other examples, the control nodes 50, 51, and 52 each control different escalators. In addition, in some cases, not all control nodes are put into use simultaneously. A detailed description will be provided below in conjunction with different embodiments.

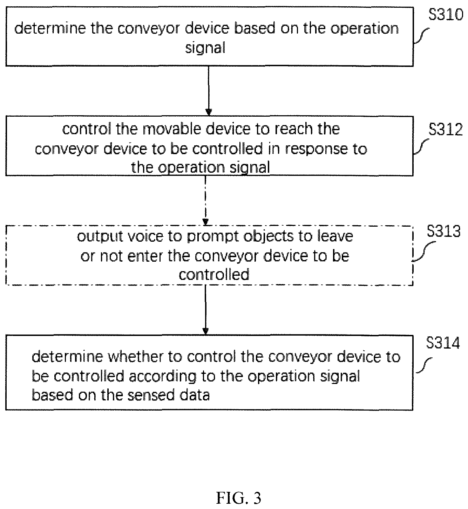

FIG. 3 is a flowchart of a control method for a conveyor device according to some examples of the present application. This method is implemented in a control system comprising a control terminal and one or more control nodes, where each control node is in communication connection with the control terminal and each control node is associated with a movable device. In the examples, each control node is arranged in its associated movable device.

As shown in FIG. 3, in step S310, the conveyor device to be controlled is determined by the control node according to an operation signal sent by the control terminal. According to the example, when a conveyor device(s) is required to be stopped or started, the control terminal sends an operation signal(s) to the respective control node.

In some examples, the control terminal sends an operation signal to the control node managing the conveyor device to be controlled. In these examples, corresponding relationships between control nodes and the conveyor devices have been pre-set in the control terminal, so that when the control terminal needs to control a conveyor device, it can determine the control node managing the conveyor device based on the corresponding relationships. Further, in these examples, each control node may be configured with information relating to conveyor devices that it manages, such as the conveyor devices' identifications and locations. In some cases, only location information may be configured.

In other possible examples, the control terminal may broadcast operation signal. Each control node determines, based on the identification contained in the broadcasted signal, whether the conveyor device to be controlled is the one it manages, and if so, the control node can respond to the operation signal.

In step S312, in response to the operation signal sent by the control terminal, the control node receiving the operation signal controls its associated movable device to move to the conveyor device to be controlled.

As an example, the control node sends location information to the processor or mobile controller of the movable device and instructs the movable device to go to that location, where the location information is the conveyor device to be controlled indicated by the operation signal. The control node can be configured with information such as the conveyor device identification and the location of the conveyor device inside the building. With the information, the control node can determine the location of the conveyor device based on the conveyor device identification included in the operation signal after receiving the operation signal. For example, the conveyor device identification and the location information of the conveyor device inside the building are stored in the memory of the control node or movable device in a way that can be indexed to each other, so that the control node can index the location based on the identification.

According to an example of the present application, the control operation of stopping or starting the conveyor device should be implemented at the entrance for the object to the conveyor device to be controlled. Therefore, after receiving the operation signal, each of the control nodes controls the movable device where it is disposed to reach the entrance. For an up-going escalator, the entrance is located at its lower landing; for a down-going escalator, the entrance is located at its upper landing.

In step S314, based on the sensed data from the sensing device regarding the condition of objects on the conveyor device to be controlled, the control node determines whether to control the conveyor device to be controlled according to the indication of the operation signal.

Herein, the objects as mentioned includes objects already located on the conveyor device, as well as objects about to board the conveyor device to be controlled, such as the objects located at the upper or lower landing of the conveyor device. The sensing device includes one or more devices that can be used to sense the object to be conveyed, such as cameras, 2D sensors, 3D sensors, infrared sensors, LiDAR sensors, etc. In some embodiments, the sensing devices are arranged on the movable devices; namely, one or more devices, such as cameras, 2D sensors, 3D sensors, infrared sensors, LiDAR sensors, etc. are arranged on the movable devices. In other possible embodiments, the sensing devices are arranged around the conveyor devices to be controlled and communicatively connected with control nodes. In these embodiments, the cameras or other devices that are already used to monitor the operation of the conveyor devices can be used as the sensing devices.

The result determined from the sensed data may indicated that the control the conveyor device can be controlled according to the operation signal. In this case, the control operation indicated by the operation signal can be implemented to the conveyor device. The result determined may be that the conveyor device to be controlled cannot be controlled according to the indication of the operation signal. If so, no control operation indicated by the operation signal is implemented to the conveyor device.

If the sensed data indicates that there is no object on the conveyor device, the stopping of the conveyor device can be operated. If the sensed data indicates that there is object(s) on the conveyor device, then other measures can be taken according to the actual situation. For the operation of stopping or starting the conveyor device, it can be implemented by sending corresponding operation signal to the conveyor device and controlling the conveyor device to stop or start. In this case, the control node can send a feedback signal indicating that the conveyor device has been stopped or started to the control terminal, after the conveyor device to be controlled was stopped or started according to the operation signal. In other examples, the stopping or starting the conveyor device can be operated by the control terminal in the event that the control terminal receives a signal indicating that the operation of stopping or starting can be implemented from the control node which already determines in site that the conveyor device can be operated according to the operation signal.

The method illustrated in FIG. 3 may further include step S313, where the control node can control a voice device to output voice so as to prompt objects to leave or not enter the conveyor device to be controlled. This step can be started before the control node determines whether to control the conveyor device according to the operation signal based on the sensed data from the sensing device. In some examples, the voice output can continue until the control method is executed. For example, the voice device outputs a voice that expresses the meaning of "about to stop, please do not board".

The control method for a conveyor device according to the present application can be executed by the control system shown in FIG. 2, that is, the method shown in FIG. 3 can be executed by the control system shown in FIG. 2. Specifically, as an example, the node in the control nodes 50, 51, and 52 that receives an operation signal responds to the operation signal sent by the operation terminal 60 (step S310), so as to control the movable device where it is disposed to reach the conveyor device to be controlled (step S312). And then, the control node receiving the operation signal can, for example, obtain real-time sensed data from the surveillance cameras for the conveyor device to be controlled and determine on the obtained sensed data whether the operation indicated by the operation signal can be executed (step S314). In some cases, the control node receiving the operation signal can obtain sensed data from the sensing device arranged on the movable device. In the example below in which a robot is used as the movable device, the robot's sensing system is used as the sensing device. In addition, the control node receiving the operation signal can send a signal to, for example, a broadcast inside a building (if any) in order to broadcast the information of not to entering or leaving the conveyor device to be controlled (S313). It is possible for the control node receiving the operation signal to issue a voice prompt for prompting to leave or not to enter the conveyor device to be controlled through a voice device arranged on the movable device.

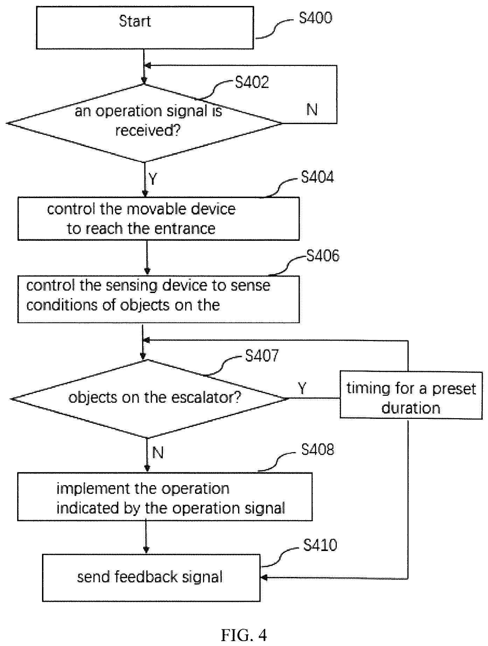

FIG. 4 is a flowchart of a control method for a conveyor device according to some examples of the present application. The following will describe the control method for a conveyor device shown in FIG. 4 being executed by the system shown in FIG. 2, where the conveyor device is an escalator. In this example, the escalator is constructed as a conveying facility for a building, with escalators A1 and A2 running between the first and second floors of the building, and escalators B1 and B2 running between the second and third floors of the building. In these examples, the movable device 70 is placed on the first floor of the building, and the control node 50 is configured to manage escalators A1 and A2. The movable device 71 is located on the second floor of the building, and the control node 51 is configured to manage escalators A1, A2, B1, and B2. The movable device 72 is located on the third floor of the building, and the control node 52 is configured to manage escalators B1 and B2. More specifically, the movable devices 70, 71, and 72 are all robots, and therefore, in the following text, movable devices 70, 71, and 72 are also referred to as robots 70, 71, and 72.

In the examples described in conjunction with FIG. 4, each control node is configured to only control the escalator it manages on the floor where its robot is located.

Step S400 is the starting step, during which the control nodes 50, 51, and 52 can complete power on, initialization, and other operations to enter normal operating conditions. In step S402, each of the control nodes 50, 51, and 52 determines whether an operation signal has been received.

The operation signal is sent from the control terminal 60 to the control node that manages the escalator to be controlled. The control terminal 60 is configured with corresponding relationships between control nodes and the respective controlled escalators, so when one or more escalators are to be controlled, operation signals can be directly sent to the corresponding control nodes. According to an example of the present application, the escalators managed by each of the control nodes are configurable as needed, i.e., the number of the escalators can be changed, added, or reduced.

As a non-limiting example, each of the control nodes manage an escalator of which entrance for the object locates at the floor where the robot configured with the control node is located. For example, if the escalator A1 goes up, the entrance of the escalator A1 for the object is on the first floor, and if the escalator A2 goes down, the entrance of the escalator A2 for the object is on the second floor. According to this embodiment, the robot 70 is located on the first floor, and the control node 50 therefore manages the up-going escalator A1 whose entrance for the object is also located on the first floor. The robot 71 is located on the second floor, and the control node 51 therefore manages the down-going escalator A2 the entrance of which for the object is located on the second floor.

Upon receiving an operation signal, proceed to step S404. Otherwise, continue with step S402 to determine whether an operation signal has been received. In step S404, the control node (one or more of nodes 50, 51, and 52) that receives the operation signal controls the robot where it is disposed to reach the entrance of the escalator to be controlled. In step S406, the control node controls the sensing device to sense the condition of objects on the escalator, in which the sensing device is the robot's sensing system. In addition, during this process, the control node can also control the voice device of the robot's voice system to output a voice prompt when the robot moves to the entrance of the escalator, so that people around can learn that the escalator is about to stop and thus not to board.

The control node determines whether there are objects on the escalator based on the sensed data from the sensing device, as shown in step S407. When it is determined that there is no object on the escalator, the control node implements the operation indicated by the operation signal, as shown in step S408, and then proceed to step S410. Implementing the operation indicated by the operation signal is, for example, sending a stop or start signal to the escalator, so that the escalator can stop or start running based on it. However, with determining that there is an object on the escalator, go back to step S406 and at the same time, start timing for a preset duration. If there is any object on the escalator all the time during the preset duration, proceed to step S410. When a condition of no object on the conveyor device occurs within the preset duration, the conveyor device to be controlled is controlled by the control node according to the indication of the operation signal.

In step S410, the control node sends a feedback signal to the control terminal 60. When the operation indicated by the operation signal has been implemented, the feedback signal is used to indicate that the operation indicated by the operation signal has been completed, for example, the feedback signal following the step 408 indicate that the operation indicated by the operation signal has been completed. In the case where the operation indicated by the operation signal has not been implemented, the feedback signal can be used to indicate that the operation indicated by the operation signal has not been implemented. The feedback signal can include more information as needed, with no restrictions made in this regard.

As an example, the control terminal 60 needs to control the up-going escalator A1 to stop. The control node 50, after determining that it has received an operation signal from the control terminal 60 to stop the escalator A1 (step S402), controls the robot 70 to reach the entrance of the escalator A1 (step S404). The control node 50 controls (step S406) the robot to sense the condition of objects on the escalator A1, and during this process, the control node 50 also controls (step S406) the robot to emit a voice prompt so that people around can learn that the escalator A1 is about to stop. The control node 50 determines whether there is an object on the escalator A1 based on the sensed data (step S407). In the case where there is no object, the control node 50 implements the operation of stopping the escalator indicated by the operation signal (step S408), to control the escalator A1 to stop running. Otherwise, the control node 50 continues to determine the condition of objects on the escalator A1 in step S407 based on the data sensed in step S406. During this continuous process, if there are always objects on the escalator A1 within the preset duration, the control node 50 executes the step S410 and sends a feedback signal indicating the operation not being implemented to the control terminal 60. In the specific examples described in conjunction with FIGS. 2 and 4, only the scenario of the escalator A1 being controlled is described. In practical applications, however, there may be a plurality of escalators to be controlled to stop or start during parallel periods. For example, escalator A1, escalator B2 (down-going), and escalator B1 (up-going) may be controlled to be started simultaneously. According to the control method described in the present application, operation signals can be simultaneously sent to the control node 50, control node 52, and control node 51. The three control nodes each operate according to the process described above to implement the operation.

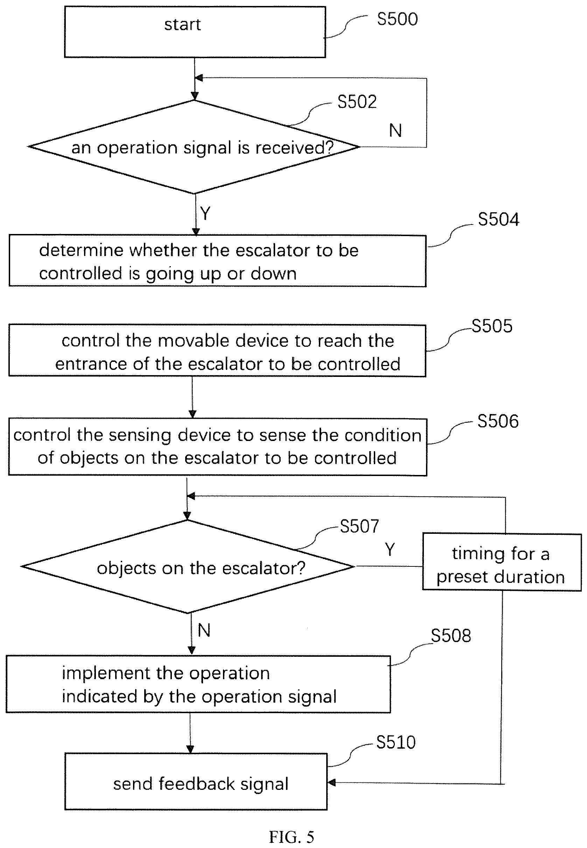

FIG. 5 is a flowchart of a control method for a conveyor device according to other examples of the present application. The following will describe the control method for a conveyor device shown in FIG. 5 being executed by the system shown in FIG. 2, where the conveyor device is an escalator and the movable device is a robot. In this example, the escalator is constructed as a conveying facility for a building, with escalators A1 and A2 running between the first and second floors of the building, and escalators B1 and B2 running between the second and third floors of the building. In these examples, the robot 70 is placed on the first floor of the building, and the control node 50 is configured to manage escalators A1 and A2. The movable device 71 is located on the second floor of the building, and the control node 51 is configured to manage escalators B1 and B2.

The difference from the example of the control method described in conjunction with FIG. 4 is that in the example described in conjunction with FIG. 5, the control node 50 manages escalators A1 and A2, regardless of whether they are going up or down. The control node 51 manages escalators B1 and B2, regardless of whether they are going up or down. The control node 52 is currently not in use, and can be used as a backup in some cases.

Step S500 is the starting step, during which each of the control nodes 50 and 51 can complete power on, initialization, and other operations to enter normal operating conditions. In step S502, each of the control nodes 50 and 51 determines whether an operation signal has been received. Upon receiving the operation signal, proceed to step S504; otherwise, continue with step S502. In step S504, the control node that receives the operation signal determines whether the escalator to be controlled is going up or down. Based on the determination that the escalator is going up or down, the control node that receives the operation signal controls the robot where it is disposed to reach the entrance of the escalator to be controlled, as shown in step S505. Here, if the control terminal 60 already indicates in the operation signal that the escalator to be controlled is an escalator that is going up or down, the determination in step S504 can be made based on this operation signal. If the control terminal 60 does not indicate in the operation signal that the escalator to be controlled is an up-going or down-going escalator, the control node can send a signal to the control terminal 60 to obtain the running status of the escalator; or alternatively, the control node can determine whether the escalator is going up or down based on the running data of the escalator sensed by the robot. According to this embodiment, the control node is configured to control the escalator at the entrance of the escalator for the object. Therefore, the control node receiving the operation signal will determine whether it is necessary to go up or down to reach the entrance of the escalator for the object based on its own position and the determination that the elevator is going up or down.

In some scenarios, the control node can control the robot where it is disposed to go up and down by taking an elevator (if there is one inside the building), or alternatively by taking an escalator.

In step S506, the control node controls the robot to sense whether there is an object on the escalator to be controlled. Optionally, during this process, the control node can also control the robot to emit a voice prompt when the robot moves to the escalator, so that people around can learn that the escalator is about to stop and thus not to board.

As shown in step S507, it is determined whether there are objects on the escalator based on the sensed data from the sensing device. When it is determined that there is no object on the escalator, the control node implements the operation indicated by the operation signal, as shown in step S508, and then proceed to step S510. Upon determining that there are one or more objects on the escalator, go back to step S507, and at the same time, start timing for a preset duration. If the escalator during this preset duration has one or more objects thereon, proceed to step S510; however, if the condition of no object on the escalator occurs within the present duration, the control node implements the operation indicated by the operation signal.

In step S510, a feedback signal is sent to the control terminal 60. When the operation indicated by the operation signal has been implemented, the feedback signal is used to indicate that the operation indicated by the operation signal has been completed. In the case where the operation indicated by the operation signal has not been implemented, the feedback signal is used to indicate that the operation indicated by the operation signal has not been implemented. The feedback signal can include more information as needed, with no restriction made in this regard.

The control method according to the examples of the present application can be implemented through program instructions, and the application modules implemented by program instructions can be configured in the respective control nodes and the control terminal of the control system as shown in FIG. 2, so that the control system can implement the control process described above. Where possible, the control method herein may also be implemented by separate hardware, such as a controller, which can be disposed in a movable device such as a robot to achieve the above control process.

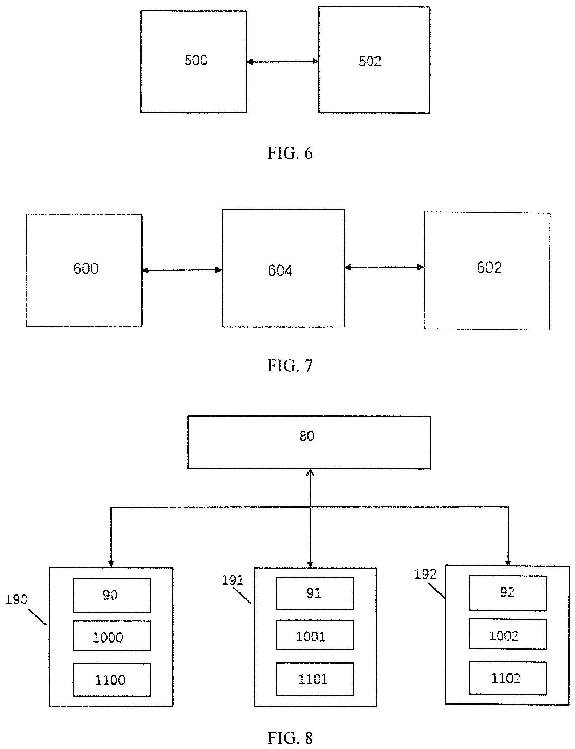

FIG. 6 illustrates the block diagram of a control node according to an example of the present application. The control node is communicatively connected with the control terminal for controlling the conveyor device. The control node can be associated with a movable device such as a robot in such a way that the movable device can be controlled by the control node. In some instances, the control node can be implemented as a cloud device and in other instances the control node can be implemented to a movable device like a robot. When the control node is implemented to the movable device, it can be implemented as part of the control system of the movable device; and alternatively, it can be combined with the movable device in a removable manner or can be fixed to the movable device.

The control node comprises a communication unit 500 and a control unit 502. The communication unit is configured to receive operation signals for controlling the conveyor device and to send signals. When the control node is integrated into a movable device such as a robot, the communication unit 500 may adopt the communication unit of the movable device. The control unit 502 is configured to determine the conveyor device to be controlled based on the operation signal, control the movable device to reach the conveyor device to be controlled, and determine whether to control the conveyor device to be controlled according to the indication of the operation signal based on the sensed data from the sensing device.

According to some examples, sensing devices and voice devices each are arranged on movable devices associated with the control nodes. However, in some cases, the sensing device can be arranged, for example, outside the movable device, such as a camera arranged around the conveyor device to be controlled to monitor its operation.

In the examples of the present application, the sensing devices and the voice devices are both arranged on the movable devices associated with the control nodes. The sensing device includes one or a combination of cameras, 2D sensors, 3D sensors, infrared sensors, and LiDAR sensors. The voice device is, for example, a component that can output voice, such as a microphone. In further examples, the mobile device is a robot. Therefore, the sensing device can be one or a combination of cameras, 2D sensors, 3D sensors, infrared sensors, LiDAR sensors arranged on the robot, or the sensing device can be implemented by the robot's own sensing system. The voice device is a voice device arranged on the robot, or the voice device is implemented by the robot's own voice system.

Turning to FIG. 6, the control node shown can implement the steps performed by the control node in any of the examples described in conjunction with FIGS. 3, 4, and 5, which will not be repeated in detail here. Alternatively, the control node shown in FIG. 6 can be implemented as the control node described above in conjunction with any example, such as the control nodes 50, 51, 52.

FIG. 7 is a block diagram of the control terminal according to an example of the present application. As described above, the control terminal can be a system or a separate controller. The control terminal is respectively in communication connection with a plurality of control nodes, where each control node can be implemented by the control node shown in FIG. 6, and the control terminal is used to send operation signals for controlling the conveyor device.

According to the examples of the present application, the control terminal may comprise a memory 600, a communication unit 602, and a controller 604. The memory 600 stores the corresponding relationships between the control nodes and their managed conveyor devices, and can also store program instructions and other information that may need to be stored. The controller 604 generates operation signals to control the conveyor device according to control needs. The communication unit 602 is configured to send the operation signals to the control node and to receive feedback signals sent by each control node.

According to the examples of the present application, when the conveyor device to be controlled is an up-going conveyor device, an operation signal is sent to a control node managing the conveyor device, in which the movable device associated with said control node locates at the floor where the lower land of said conveyor device locates; and when the conveyor device to be controlled is a down-going conveyor device, an operation signal is sent to a control node managing the conveyor device in which the movable associated with said control node locates at the floor where the upper land of said conveyor device locates.

As a non-limiting example, the control terminal shown in FIG. 7 can be configured to perform the steps performed by the control terminal in the example of any one of the methods described above in conjunction with FIGS. 3, 4, and 5, which will not be repeated in detail here. Alternatively, the control terminal shown in FIG. 7 can be implemented as the control terminal described above in conjunction with any example. For example, the control terminal 60 described in conjunction with FIG. 2 can adopt the control terminal shown in FIG. 7.

The present application also provides a control system for a conveyor device, which comprises a control terminal, one or more control nodes, sensing devices, and voice devices. Each control node is communicatively connected with the control terminal, and each control node is configured to be associated with a movable device, where the associated movable device manages more than one conveyor device under the control of the control node. The sensing device is used to sense the object on the conveyor device and the operation status of the conveyor device, and the control node can obtain the sensed data from the sensing device. The voice device outputs voice under the control of the control node. Both sensing devices and voice devices can be arranged on movable devices. In some examples, control nodes can also be arranged on movable devices. In the event of a movable device being a robot, the sensing device and the voice device can be respectively implemented by the robot's sensing system and voice system, and the control node can be arranged on the robot as part of the robot's control system or controller, or arranged on the robot in a way that can interact with the robot's control system or controller.

FIG. 8 is a block diagram of the control system, which, for example, includes three control nodes, three sensing devices, and three voice output devices. As shown in FIG. 8, the control nodes 90, 91, and 92 are respectively in communication connection with the control terminal 80, wherein the control node 90 is connected to the sensing device 1000 and to the voice device 1100, the control node 91 is connected to the sensing device 1001 and to the voice device 1101, and the control node 92 is connected to the sensing device 1002 and to the voice device 1102. In this example, the control nodes 90, 91, and 92 are respectively arranged in movable devices 190, 191, and 192. According to the examples of the present application, sensing devices and voice devices connected to the control nodes 90, 91, and 92 are also arranged in corresponding movable devices.

The control system shown in FIG. 8 can be used to implement any of the control methods described in conjunction with FIGS. 3, 4, and 5 above. For example, the control terminal 80 shown in FIG. 8 implements the functions achieved by the control terminal in any examples above described, for example, the control terminal 60 in FIG. 2. The control nodes 90, 91, and 92 can implement the functions implemented by the control nodes in any of the examples mentioned above, for example, the steps performed by the control nodes 50, 51, and 52 shown in FIG. 2. Sensing devices 1000, 1001, and 1002 can be used to implement the functions of the sensing device in any of the examples mentioned above, while voice devices 1100, 1101, and 1102 can be used to implement the functions of the voice device in any of the examples mentioned above. In the case of a mobile device being a robot, control nodes 90, 91, and 92 can be respectively arranged in robots 190, 191, and 192. Sensing devices 1000, 1001, and 1002 can be implemented by build-in sensing systems of the robots 190, 191, and 192, and voice devices 1100, 1101, and 1102 can be implemented by the voice systems of the robots 190, 191, and 192.

In summary, by implementing the method according to the examples of the present application or by adopting the control terminal, control node, and control system according to the examples of the present application, control of each conveyor device is distributed to different control nodes, and each control node controls its managed conveyor devices (such as starting or stopping the escalators) based on the operation signals sent from the control terminal, without the need for manual control of the respective conveyor devices one by one. Further, the distributed setting of the respective control nodes can simultaneously control and complete the starting or stopping of a plurality of conveyor devices without the need for manual operation by multiple persons. In a word, the control strategy of the conveyor device according to the present application can greatly save labor costs, and its distributed automated control simplifies management.

It should be noted that in the above embodiments, the distributed control nodes are used to control the movable devices to reach the entrance of the conveyor device for control. However, the present application does not exclude the application scenario that the control nodes control the conveyor device on the same floor of the building without considering conveyor device's entrance. For example, the control node 50 shown in FIG. 2 can only control the up-going escalator A1 from the first floor to the second floor and the down-going escalator A2 from the second floor to the first floor on the first floor of a building (such as a shopping mall), without the need to consider the entrance position of the escalator A2. This control operation can be carried out when the mall is not open for business in the morning or is closed at night. This control operation may also be carried out in other scenarios where the control node 50 can assist in determining the entrance of the escalator A2 through the sensed data from the sensing device around the upper landing station of the escalator A2.

In addition, in the examples described above, when the control node is arranged on or in a movable device like a robot, the movable device can be regarded as a control node, which is a controllable and movable control node communicatively connected with the control terminal.

Although specific embodiments of the present application have been shown and described in detail to illustrate the principles of the present application, it should be understood, however, that the present application may be implemented in other ways without departing from such principles, such as combining the features of the various embodiments described herein to obtain new embodiments.

## Claims

1. A control method for a conveyor device, particularly for an escalator or a moving walk, in which the method is executed by a control system comprising a control terminal and one or more control nodes, and the one or more control nodes are communicatively connected with the control terminal, the method comprising:
controlling, by the control node that receives an operation signal, a movable device associated with said control node to reach a conveyor device to be controlled, in response to the operation signal sent by the control terminal; and
determining, by said control node, whether to control the conveyor device to be controlled according to an indication of the operation signal, based on sensed data from a sensing device regarding condition of objects on the conveyor device to be controlled.

2. The method according to claim 1, wherein determining, by the control node, whether to control the conveyor device to be controlled according to the indication of the operation signal based on the sensed data from the sensing device, comprises:
determining whether there are objects on the conveyor device to be controlled; and
controlling the conveyor device to be controlled according to the indication of the operation signal if there is no object on the conveyor device to be controlled.

3. The method according to claim 2, wherein the method further comprises:
continuously determining whether there are objects on the conveyor device to be controlled within a preset duration based on the sensed data from the sensing device, if it is determined that there are objects on the conveyor device to be controlled;
generating and sending a feedback signal indicating that the conveyor device to be controlled is not controlled according to the indication of the operation signal, if there are always objects on the conveyor device within the preset duration; or
controlling the conveyor device to be controlled according to the indication of the operation signal, when a condition of no object on the conveyor device occurs within the preset duration.

4. The method according to any of claims 1 to 3, the method further comprising:
controlling a voice device to output voice to prompt the objects to leave or not enter the conveyor device to be controlled.

5. The method according to any of claims 1 to 4, wherein the method further comprises:
sending, by the control terminal, an operation signal to a control node managing the conveyor device to be controlled and associated with a movable device which is located on a floor of a building where the lower landing of said conveyor device is located, if the conveyor device to be controlled is an up-going conveyor device; and
sending, by the control terminal, an operation signal to a control node managing the conveyor device to be controlled and associated with a movable device which is located on a floor of a building where the upper landing of said conveyor device is located, if the conveyor device to be controlled is a down-going conveyor device.

6. The method according to any of claims 1 to 5, wherein the method further comprises:
determining, by the control node, whether the conveyor device to be controlled according to the indication of the operation signal is up-going or down-going based on the sensed data from the sensing device regarding the operation condition of the conveyor device to be controlled;
controlling the movable device to reach the lower landing of the conveyor device to be controlled, if it is determined to be up-going;
controlling the movable device to reach the upper landing of the conveyor device to be controlled, if it is determined to be down-going.

7. The method according to any of claims 1 to 6, wherein the movable device is a robot; wherein particularly each of the control nodes is disposed at the robot.

8. A control system for a conveyor device, particularly for an escalator or a moving walk, comprising:
a control terminal;
one or more control nodes, each of the control nodes being communicatively connected with the control terminal, and each of the control nodes being associated with a movable device, where the associated movable device manages more than one conveyor device under control of the control node;
a sensing device for sensing objects on the conveyor device and an operation condition of the conveyor device, where the data sensed by the sensing device is obtainable by one of the control nodes; and
a voice device that outputs voice under the control of the one or more control nodes;
wherein, the control system is configured to execute the control method according to any of claims 1 to 7.

9. The control system according to claim 8, wherein the movable device is a robot, and the sensing device and the voice device are respectively implemented by a sensing system and a voice system of the robot; and/or wherein the control node is arranged on the movable device associated with it.

10. A control node for controlling a conveyor device, particularly for an escalator or a moving walk, comprising:
a communication unit configured to receive an operation signal for controlling the conveyor device and to transmit a signal;
a control unit configured to determine a conveyor device to be controlled based on the operation signal, control a movable device associated with the control node to reach the conveyor device to be controlled, and determine whether to control the conveyor device to be controlled according to an indication of the operation signal based on sensed data from a sensing device indicating the condition of objects on the conveyor device to be controlled sensed by the sensing device.

11. The control node according to claim 10, wherein the control unit is configured to determine whether to control the conveyor device to be controlled according to the indication of the operation signal by:
determining whether there are objects on the conveyor device to be controlled based on the sensed data;
controlling the conveyor device to be controlled according to the indication of the operation signal, if there is no object on the conveyor device to be controlled.

12. The control node according to claim 11, wherein the control unit is further configured to:
continuously determine whether there are objects on the conveyor device to be controlled within a preset duration based on the sensed data, if it is determined that there are objects on the conveyor device to be controlled;
generate and send a feedback signal indicating that the conveyor device to be controlled is not controlled according to the indication of the operation signal, if there are always objects on the conveyor device within the preset duration; or
control the conveyor device to be controlled according to the indication of the operation signal, when a condition of no object on the conveyor device occurs within the preset duration.

13. The control node according to any of claims 10 to 12, wherein the control unit is further configured to:
control a voice device to output voice to prompt the objects to leave or not enter the conveyor device, before determining whether to control the conveyor device to be controlled according to the indication of the operation signal based on the sensed data; and/or wherein the movable device is a robot; and/or wherein the control node is arranged on the movable device associated with it, and the sensing device and the voice device are arranged on said movable device.

14. A control terminal, particularly for an escalator or a moving walk, wherein the control terminal is configured to communicatively connected with one or more control nodes, where each of the control nodes is the control node according to any of claims 10 to 13, the control terminal comprising:
a memory for storing corresponding relationships between control nodes and managed conveyor devices;
a controller configured to generate operation signals for controlling the conveyor devices according to control needs; and
a communication unit configured to send the operation signals to the control nodes and to receive feedback signals from respective control nodes.

15. The control terminal according to claim 14, wherein the control terminal is further configured to:
send an operation signal to a control node managing the conveyor device to be controlled and associated with a movable device which is located on a floor of a building where the lower landing of said conveyor device is located, if the conveyor device to be controlled is an up-going conveyor device; and
send an operation signal to a control node managing the conveyor device to be controlled and associated with a movable device which is located on a floor of a building where the upper landing of said conveyor device is located, if the conveyor device to be controlled is a down-going conveyor device.
